# EUROPEAN PATENT APPLICATION

(11) **EP 4 717 374 A1**
(43) Date of publication of application: **01.04.2026**
(21) Application number: 25198632.9
(22) Date of filing: 28.08.2025
(51) Int. Cl.: B21D 39/02, F28D 15/02, H01M 10/6556, B21D 53/04, B21D 41/04

(54) **FLOW PATH FORMING MEMBER, MANUFACTURING METHOD THEREFOR, AND MANUFACTURING APPARATUS THEREOF**

(30) Priority: 26.09.2024 JP 2024167040
(71) Applicant: AISIN CORPORATION, Aichi 448-8650 (JP)
(72) Inventor: HOSHINO, Miki, Kariya, Aichi, 448-8650 (JP); SUGAWARA, Koji, Kariya, Aichi, 448-8650 (JP); KATO, Kenji, Kariya, Aichi, 448-8650 (JP); ITO, Satoru, Kariya, Aichi, 448-8650 (JP); YOSHIDA, Takafumi, Kariya, Aichi, 448-8650 (JP); TAOKA, Akira, Kariya, Aichi, 448-8650 (JP)
(74) Representative: TBK

(57) **Abstract**

Provided is a flow path forming member (70) that forms a flow path through which a heat medium passes. The flow path forming member includes a first wall surface portion (82) and a second wall surface portion (84), and a seal portion (78) related to the flow path outside a formation position of the flow path while the first wall surface portion and the second wall surface portion face each other at a distance at the formation position of the flow path. The seal portion is formed by a mechanical deformation portion (821) of the first wall surface portion and a mechanical deformation portion (841) of the second wall surface portion that are integrated with each other via a joint surface (90).

## Description

### TECHNICAL FIELD

This disclosure relates to a flow path forming member, a manufacturing method therefor, and a manufacturing apparatus thereof.

### BACKGROUND DISCUSSION

A technique for sealing, by another member, an end portion of a member that forms a flow path through which a heat medium passes is known.

Examples of the related art include US2017/0162922 (Reference 1).

However, in the related art, another member is required to secure a necessary sealing property, and the number of components cannot be reduced.

Therefore, in one aspect, an object of this disclosure is to reduce the number of components while securing a necessary sealing property in a flow path forming member that forms a flow path through which a heat medium passes.

### SUMMARY

According to an aspect of this disclosure, provided is a flow path forming member that forms a flow path through which a heat medium passes. The flow path forming member includes a first wall surface portion and a second wall surface portion, and a seal portion related to the flow path outside a formation position of the flow path while the first wall surface portion and the second wall surface portion face each other at a distance at the formation position of the flow path, in which the seal portion is formed by a mechanical deformation portion of the first wall surface portion and a mechanical deformation portion of the second wall surface portion that are integrated with each other via a joint surface.

According to the above aspect of this disclosure, it is possible to reduce the number of components while securing the necessary sealing property in the flow path forming member that forms the flow path through which the heat medium passes.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a diagram illustrating an example of an in-vehicle system 1 to which a flow path forming member according to the present embodiment is applicable;
Fig. 2 is a schematic view illustrating an example of a relationship between the flow path forming member and a battery according to the present embodiment;
Fig. 3 is a schematic cross-sectional view taken along a line III-III in Fig. 2;
Fig. 4 is a schematic perspective view of the flow path forming member in a single item state;
Fig. 5 is a view illustrating a seal structure (a seal portion) of the flow path forming member, and is a cross-sectional view taken along a line V-V in Fig. 4;
Fig. 6 is a flowchart schematically illustrating a flow of a manufacturing method for a flow path forming member 70;
Fig. 7 is a view illustrating a workpiece, and is a perspective view schematically illustrating a workpiece W;
Fig. 8 is a cross-sectional view taken along a line VIII-VIII in Fig. 7;
Fig. 9 is a view illustrating a die assembly, and is a perspective view schematically illustrating the die assembly;
Fig. 10 is a cross-sectional view illustrating a main part of the die assembly before the workpiece is set;
Fig. 11 is a cross-sectional view illustrating the main part of the die assembly in a state where the workpiece is set; and
Fig. 12 is a cross-sectional view illustrating the main part of the die assembly when the seal portion is formed, and is a cross-sectional view illustrating a relationship between the workpiece and the die assembly.

### DETAILED DESCRIPTION

Hereinafter, embodiments will be described in detail with reference to the accompanying drawings. Dimensional ratios in the drawings are merely examples and are not limited thereto. Further, shapes and the like in the drawings may be partially exaggerated for the convenience of description. In addition, in the drawings, for the sake of clarity, a plurality of portions having the same attribute may be only partially denoted by reference signs.

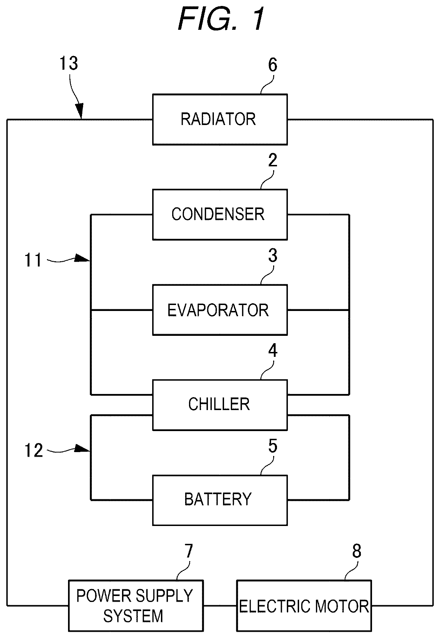

Fig. 1 is a diagram illustrating an example of an in-vehicle system 1 to which a flow path forming member 70 (to be described later) according to the present embodiment is applicable.

The in-vehicle system 1 is mounted on a vehicle. In the present embodiment, the vehicle as a mounting object is an electric vehicle or a hybrid vehicle including a battery 5. Alternatively, the vehicle may be a vehicle using only an engine as a power source.

The in-vehicle system 1 includes a refrigerant path 11 that circulates through a condenser 2, an evaporator 3, and a chiller 4 for an air conditioner (not illustrated), a refrigerant path 12 that circulates through the chiller 4 and the battery 5, and a refrigerant path 13 that circulates through a radiator 6, a power supply system 7, and an electric motor 8.

The electric motor 8 is a traveling motor of the vehicle, and the power supply system 7 may include an inverter and/or a converter. The battery 5 may be a high-voltage battery that serves as a power supply of the electric motor 8. The radiator 6 or the condenser 2 is disposed in a front portion of the vehicle and cools a refrigerant by receiving traveling wind or the like.

The in-vehicle system 1 illustrated in Fig. 1 is merely an example, and any in-vehicle system to which the flow path forming member 70 (to be described later) according to the present embodiment is applicable may be used as long as a refrigerant circulation path is included therein.

Hereinafter, as an example, a case where the flow path forming member 70 (to be described later) according to the present embodiment is provided for cooling the battery 5 will be described. However, the flow path forming member 70 (to be described later) according to the present embodiment may be used to cool any object to be cooled. For example, the flow path forming member 70 (to be described later) according to the present embodiment may be used in the refrigerant path 12 and/or the refrigerant path 13.

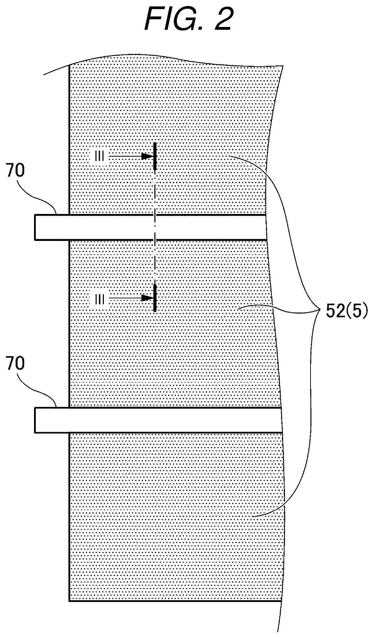

Fig. 2 is a schematic view illustrating an example of a relationship between the flow path forming member 70 and the battery 5 according to the present embodiment.

The flow path forming member 70 is thermally connected to the battery 5. The flow path forming member 70 may be formed of a material having good thermal conductivity, such as aluminum. In the example illustrated in Fig. 2, two flow path forming members 70 are disposed between cells 52 of the battery 5. Each of the flow path forming members 70 may be in direct contact with the cell 52, or may face the cell 52 via another thermally conductive member (for example, a thermally conductive sheet). Any number of flow path forming members 70 may be selected, and flow paths in the flow path forming members 70 communicate with each other.

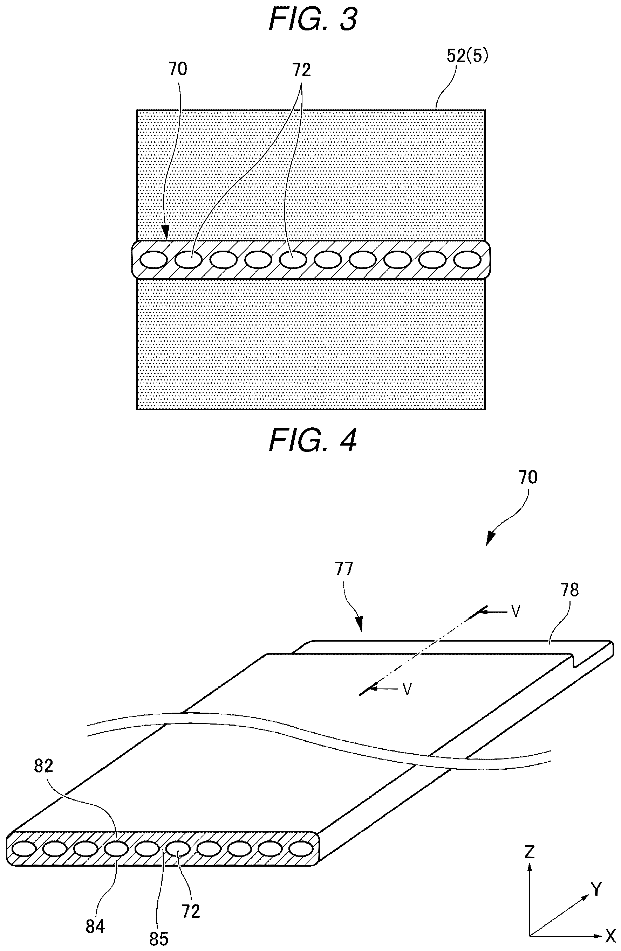

Fig. 3 is a schematic cross-sectional view taken along a line III-III in Fig. 2.

In the present embodiment, as an example, the flow path forming member 70 is a so-called perforated pipe, and a plurality of holes 72 form a flow path. The flow path forming member 70 is formed by a one-piece member. The flow path formed by the flow path forming member 70 forms a part of the refrigerant path 12 described above.

Since the flow path forming member 70 of this type has a flow path through which a refrigerant passes, it is useful to provide a seal structure related to the flow path. That is, it is useful that the flow path forming member 70 of this type has a seal structure in which the refrigerant does not leak from inside.

In terms of this point, a method for implementing a seal structure by using a sealing material or coupling another lid member is conceivable, but such a method has problems of an increase in the number of components and an increase in the number of manufacturing steps associated therewith.

Therefore, in the present embodiment, as will be described in detail below, a seal structure that improves manufacturability of the flow path forming member while securing a necessary sealing property is implemented.

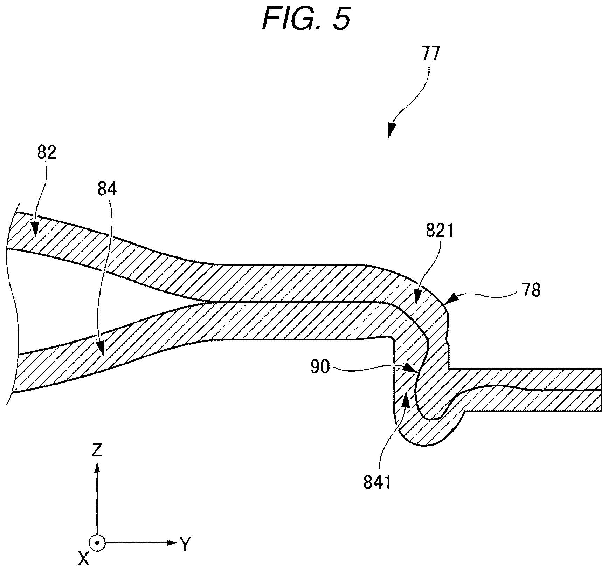

Fig. 4 is a schematic perspective view of the flow path forming member 70 in a single item state. Fig. 5 is a view illustrating a seal structure 77 (a seal portion 78) of the flow path forming member 70, and is a cross-sectional view taken along a line V-V in Fig. 4. In Fig. 4, an end portion on one side of the flow path forming member 70 is illustrated in a cross-sectional view.

Fig. 4 illustrates three axes (X, Y, and Z) in a right-handed coordinate system. Hereinafter, the cross-sectional view taken along an XZ plane refers to a cross-sectional view obtained when cut along the XZ plane (a view in a direction in which a cross section illustrated in Fig. 4 is visible). The same applies to a cross-sectional view taken along a YZ plane.

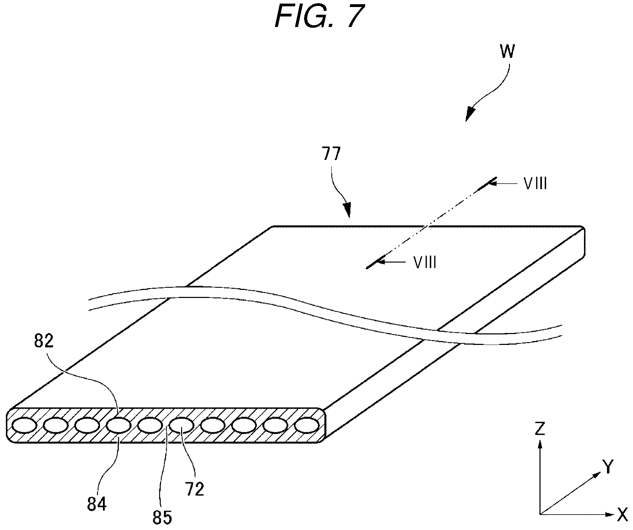

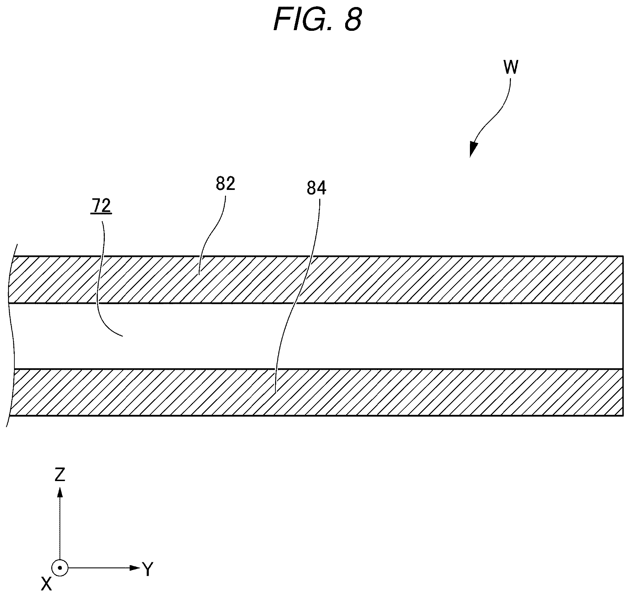

In the present embodiment, as illustrated in Fig. 4, the flow path forming member 70 has the seal structure 77 at an end portion. The seal structure 77 is provided at the end portion in an extending direction of the holes 72 in a manner of closing the flow paths (the holes 72) of the flow path forming member 70. The plurality of holes 72 are arranged side by side in an X direction. Each of the plurality of holes 72 continuously extends in parallel to each other along a Y direction (a longitudinal direction of the flow path forming member 70). That is, the flow path forming member 70 includes the plurality of holes 72 in a manner of having a constant cross section. When the seal structure 77 to be described later is not present, each of the plurality of holes 72 opens at an end surface of the flow path forming member 70 in the longitudinal direction (see a workpiece W illustrated in Figs. 7 and 8 to be described later).

In the present embodiment, an outer shape of the hole 72 in the cross-sectional view taken along the XZ plane is circular, and may be in another form. In addition, the plurality of holes 72 may be arranged side by side in a Z direction or may be arranged in a staggered manner in the Z direction and the Y direction in the cross-sectional view taken along the XZ plane, and the holes 72 may be freely arranged. The hole 72 may be a hole that forms a single space in the flow path forming member 70.

In the present embodiment, the flow path forming member 70 has a flat rectangular outer shape in the cross-sectional view taken along the XZ plane. However, the flow path forming member 70 in the cross-sectional view taken along the XZ plane may have any outer shape. Hereinafter, the flow path forming member 70 will be described in detail via two wall surface portions 82 and 84 that form two long sides of the rectangular outer shape.

The seal structure 77 according to the present embodiment is formed by mechanically coupling the two wall surface portions 82 and 84. The wall surface portions 82 and 84 face each other at a distance in a region where the holes 72 are present. On the other hand, the wall surface portions 82 and 84 are connected to each other via a partition portion 85 that partitions the holes 72.

The wall surface portions 82 and 84 are joined to each other in a manner of eliminating the holes 72 in a region where the seal structure 77 is formed to form the seal portion 78. The seal portion 78 is a seal portion related to the flow path formed by the flow path forming member 70. Therefore, the seal portion 78 is formed outside a formation position of the flow path.

The seal portion 78 is provided in such a manner that all the holes 72 are eliminated in the region where the seal structure 77 is formed. In the example illustrated in Fig. 4, the seal portion 78 continuously and linearly extends from one end to the other end of the flow path forming member 70 (the wall surface portions 82 and 84) in the X direction. In this case, each of the plurality of holes 72 is sealed without being opened at the end surface of the flow path forming member 70 in the longitudinal direction. Accordingly, the flow path forming member 70 is continuously sealed by the seal portion 78 over an entire width in the X direction.

As illustrated in Fig. 5, the seal portion 78 is formed by a mechanical deformation portion 821 of the wall surface portion 82 and a mechanical deformation portion 841 of the wall surface portion 84 that are integrated with each other via a joint surface 90. A mechanical deformation portion, such as the mechanical deformation portions 821 and 841, refers to a portion having a mechanical (for example, irreversible) deformation shape with respect to an original material. Such a seal portion 78 (the mechanical deformation portions 821 and 841) is formed by a manufacturing method (a manufacturing apparatus 200) to be described later, and a formation method therefor will be described later.

The mechanical deformation portion 821 of the wall surface portion 82 and the mechanical deformation portion 841 of the wall surface portion 84 are directly joined and integrated with each other. Accordingly, it is possible to form the seal portion 78 only by the mechanical deformation portions 821 and 841 of the two wall surface portions 82 and 84 without separately requiring a seal member or a lid member.

As illustrated in Fig. 5, the mechanical deformation portion 821 of the wall surface portion 82 and the mechanical deformation portion 841 of the wall surface portion 84 have an S-shaped joint surface 90 in the cross-sectional view taken along the YZ plane. A formation method for the S-shaped joint surface 90 will be described later. By integrating (joining) the mechanical deformation portions 821 and 841 via such S-shaped joint surface 90, a high sealing property can be secured.

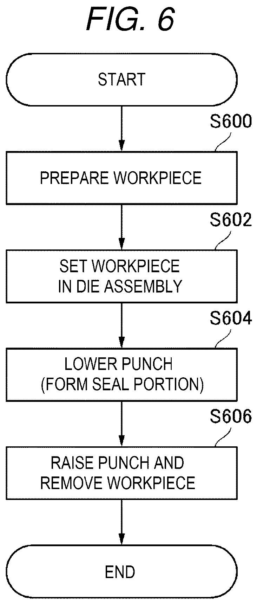

Next, a manufacturing method for the flow path forming member 70 and a formation method for the seal structure 77 (the seal portion 78) will be described with reference to Fig. 6 and subsequent drawings. A die assembly 60 will be described as a component of the manufacturing apparatus 200 of the flow path forming member 70. Although not illustrated, the manufacturing apparatus 200 of the flow path forming member 70 includes a power source, a mechanism, or the like that generates a die clamping force in addition to the die assembly 60.

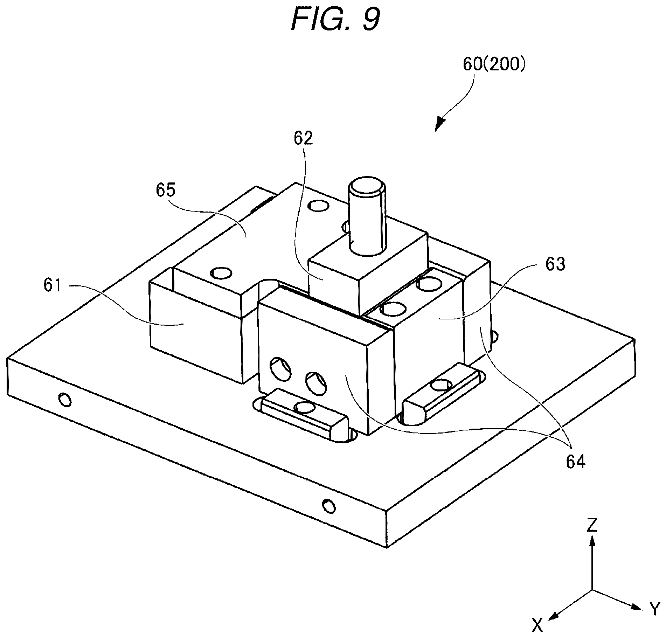

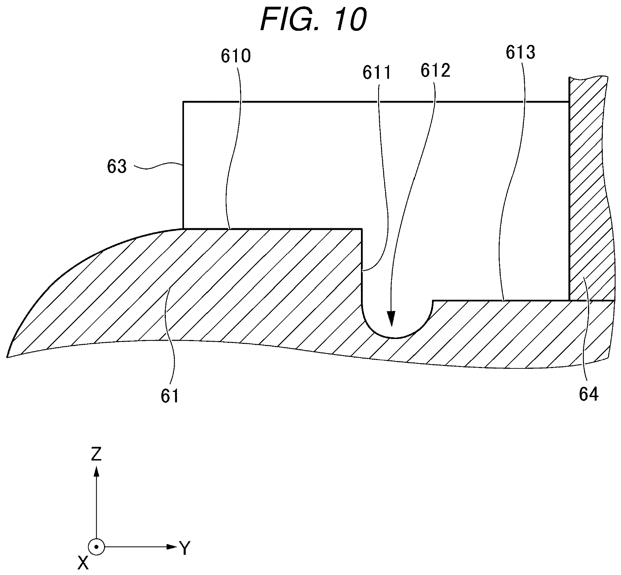

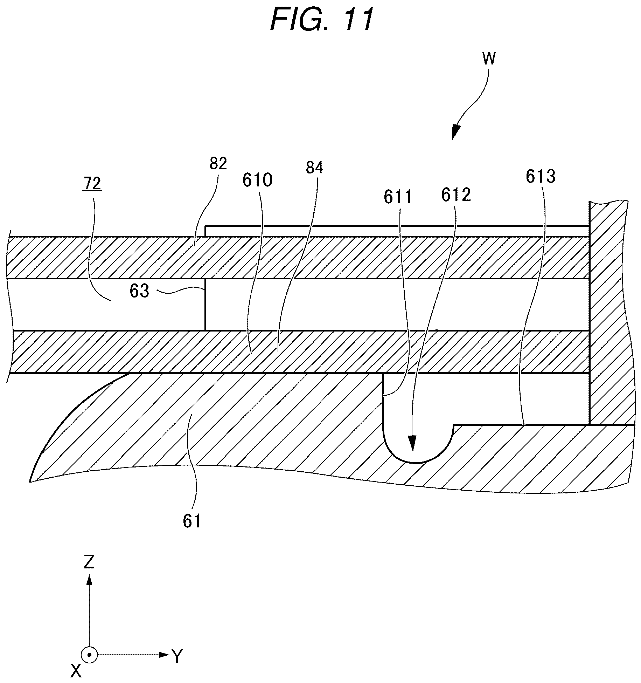

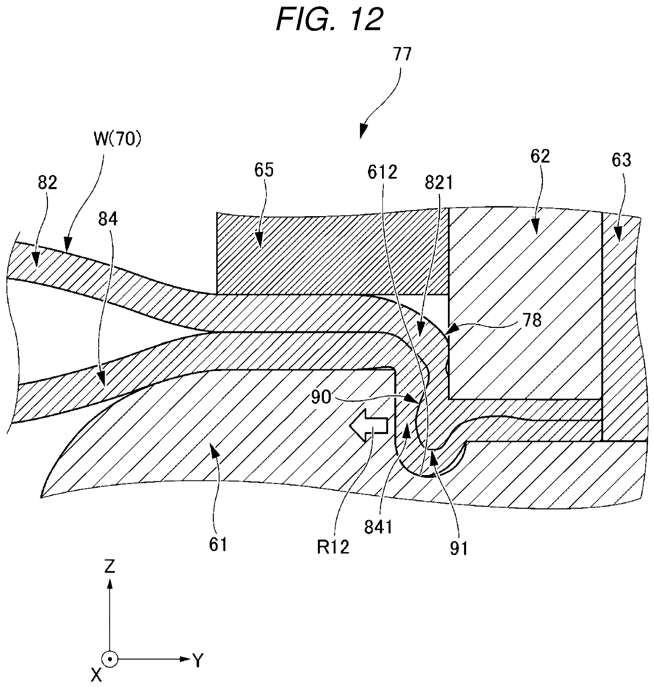

Fig. 6 is a flowchart schematically illustrating a flow of the manufacturing method for the flow path forming member 70. Fig. 7 is a view illustrating the workpiece W, and is a perspective view schematically illustrating the workpiece W. Fig. 8 is a cross-sectional view taken along a line VIII-VIII in Fig. 7. Fig. 9 is a view illustrating the die assembly 60, and is a perspective view schematically illustrating the die assembly 60. Fig. 10 is a cross-sectional view illustrating a main part (a portion forming the seal portion 78) of the die assembly 60 before the workpiece W is set. Fig. 11 is a cross-sectional view illustrating the main part of the die assembly 60 in a state where the workpiece W is set. Fig. 12 is a cross-sectional view illustrating the main part of the die assembly 60 when the seal portion 78 is formed, and is a cross-sectional view illustrating a relationship between the workpiece W and the die assembly 60.

In the following description related to the die assembly 60, the Z direction is defined as an upper-lower direction, and a positive side in the Z direction is defined as an upper side.

First, the present manufacturing method includes a step (S600) of preparing the workpiece W for forming the flow path forming member 70. As illustrated in Figs. 7 and 8, the workpiece W may have a configuration different from that of the flow path forming member 70 only in that the seal portion 78 (see Figs. 4 and 5) is not formed. That is, in the workpiece W at this stage, as illustrated in Figs. 7 and 8, each hole 72 extends along the Y direction in a manner of having a constant cross section (in the cross-sectional view taken along the XZ plane).

Next, the present manufacturing method includes a step (S602) of setting the workpiece W in the die assembly 60. Fig. 9 illustrates the die assembly 60 in the state where the workpiece W is set (however, the workpiece W is not visible in Fig. 9). The die assembly 60 includes a die 61, a punch 62, a pressing member 63 in the Y direction, a pressing member 64 in the X direction, and a pressing member 65 in the Z direction.

In the state where the workpiece W is set in the die assembly 60, the die 61 supports the workpiece W in a manner of being in surface contact with a lower surface (a surface on a negative side in the Z direction) of the workpiece W (see Fig. 11). However, as illustrated in Fig. 10, the die 61 has a groove 612 recessed downward with respect to a base surface 610 in surface contact with the workpiece W and a punch receiving portion 613 for receiving the punch 62. The punch receiving portion 613 is shallower than the groove 612, and has a receiving surface 6130 lower than the base surface 610. The die 61 has a constant cross-sectional shape in which the cross section illustrated in Fig. 10 is implemented at each position in the X direction in a region where the workpiece W is supported.

The groove 612 may have any form and is preferably an arc (a substantially semicircle) in the cross-sectional view taken along the YZ plane as illustrated in Fig. 10. A wall surface 611 from the base surface 610 to the groove 612 has a linear shape perpendicular to the base surface 610 in the cross-sectional view taken along the YZ plane, and may be in another form. For example, the wall surface 611 may have a recessed shape slightly recessed to a negative side in the Y direction or may have a protruding shape slightly protruding to a positive side in the Y direction.

The punch 62 is disposed at a position facing the punch receiving portion 613 in the upper-lower direction. The punch 62 can be raised and lowered in the upper-lower direction, and a local force (a shaping load) can be applied to the workpiece W on the die 61 by lowering the punch 62 to a lower position. A lower end surface of the punch 62 may have a planar shape and come into surface contact with the workpiece W. The lower end surface of the punch 62 is parallel to the receiving surface 6130 and faces the entire receiving surface 6130 in the upper-lower direction. The lower end surface of the punch 62 may face a part of the groove 612 on the positive side in the Y direction, in addition to the entire receiving surface 6130 in the upper-lower direction.

The pressing member 63 in the Y direction presses a Y-direction end portion of the workpiece W in the Y direction in the state where the workpiece W is set in the die assembly 60. The pressing member 63 in the Y direction may abut an end surface of the workpiece W on the positive side in the Y direction. The pressing member 63 in the Y direction may abut the workpiece W over the entire width in the X direction.

The pressing member 63 in the Y direction may be movable in the Y direction or the like with respect to the die 61. Alternatively, the pressing member 63 in the Y direction may be fixed to the die 61. In this case, the pressing member 63 in the Y direction may be formed integrally with the die 61.

The pressing members 64 in the X direction press X-direction end portions of the workpiece W in the X direction in the state where the workpiece W is set in the die assembly 60. The pressing members 64 in the X direction are provided on both sides of the workpiece W in the X direction. The pressing members 64 in the X direction may abut end surfaces of the workpiece W in the X direction. The pressing members 64 in the X direction may abut the workpiece W over an entire formation range of the seal structure 77 in the Y direction.

The pressing members 64 in the X direction may be movable in the X direction or the like with respect to the die 61. Alternatively, the pressing members 64 in the X direction may be fixed to the die 61. In this case, the pressing members 64 in the X direction may be formed integrally with the die 61.

The pressing member 65 in the Z direction presses downward on an upper surface, among an entire upper surface of the workpiece W, near the region where the seal structure 77 is formed and in a region on the negative side in the Y direction relative to the region corresponding to the punch 62. The pressing member 65 in the Z direction may be in conjunction with the punch 62 in a manner of being lowered similar to the punch 62. The pressing member 65 in the Z direction has a function of pressing a material downward such that the material is not lifted upward when being shaped by the punch 62. The pressing member 65 in the Z direction may be positioned with respect to the die 61 after the workpiece W is set in the die assembly 60.

In a modification, some or all of the pressing member 63 in the Y direction, the pressing members 64 in the X direction, and the pressing member 65 in the Z direction may be omitted or simplified.

Next, the present manufacturing method includes a step (S604) of, in the state where the workpiece W is set, lowering the punch 62 of the die assembly 60 and forming the seal portion 78. By lowering the punch 62 to deform the workpiece W, the seal portion 78 is formed. Specifically, when the punch 62 is lowered, the mechanical deformation portion 821 of the wall surface portion 82 and the mechanical deformation portion 841 of the wall surface portion 84 of the workpiece W described above are formed based on a principle of a mechanical clinch method. At this time, a material of the wall surface portion 84 is pushed into the groove 612 and is stretched such that a thickness thereof in the groove 612 is reduced. The material of the wall surface portion 82 is pushed into a space formed in this manner (see an arrow R12 in Fig. 12), so that the joining via the S-shaped joint surface 90 described above is implemented. Deformation along the groove 612 also forms a joint surface 91 along the groove 612. The joint surface 91 is continuous from the joint surface 90 in a manner of sharing a lower side of the joint surface 90.

At each position corresponding to the hole 72 among each position of the workpiece W in the X direction, the wall surface portions 82 and 84 are directly joined to each other. On the other hand, at each position corresponding to the partition portion 85 among each position of the workpiece W in the X direction, the partition portion 85 itself is crushed in the upper-lower direction. At this time, a material of the partition portion 85 can move in the X direction in a manner of filling the hole 72. That is, the partition portion 85 can be deformed in a manner of filling the hole 72 together with the wall surface portions 82 and 84.

Next, the present manufacturing method includes a step (S606) of opening the die assembly 60 (that is, raising the punch 62) and removing the processed workpiece W (that is, a finished product of the flow path forming member 70). The removed workpiece W may be subjected to post-processing, such as burr removal, to be a finished product.

According to the present embodiment, the flow path forming member 70 having the seal portion 78 can be manufactured from a single workpiece W. By using the die 61 and the punch 62 described above, the seal portion 78 that seals the end portion of the flow path forming member 70 over the entire X direction can be formed by a single step (S604). That is, the seal portion 78 can be efficiently manufactured using the die 61, which includes the groove 612 extending over the entire X direction with respect to the workpiece W, and the punch 62 extending over the entire X direction with respect to the workpiece W.

According to the present embodiment, by using the pressing member 63 in the Y direction and the pressing members 64 in the X direction, a material of the workpiece W can be efficiently pushed into the groove 612 by the punch 62. That is, an escape space of the material of the workpiece W can be substantially limited to only the groove 612 by the pressing member 63 in the Y direction and the pressing members 64 in the X direction, and the seal portion 78 can be efficiently formed. Since a range of the seal portion 78 can be limited by the pressing member 63 in the Y direction and the pressing members 64 in the X direction, the range of the seal portion 78 can be prevented from becoming excessive.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

For example, in the embodiments described above, the seal portion 78 is formed linearly with respect to the end portion of the workpiece W as viewed in the Z direction. Alternatively, the seal portion 78 may be formed at a location other than the end portion of the workpiece W, or the seal portion 78 may be formed in another form such as an arc shape as viewed in the Z direction.

Further, in the embodiments described above, a perforated pipe is used as the workpiece W, and a pipe member that implements another flow path configuration may be used. For example, the pipe member that forms a flow path in which a large number of cylindrical fins are arranged may be used as the workpiece W. Further, the workpiece W has a constant cross-sectional shape along the XZ plane over the entire Y direction, but is not limited thereto. For example, the workpiece W may have a different cross-sectional shape along the XZ plane only in a Y-direction range in which the seal structure 77 is formed.

In the embodiment described above, the punch 62 has a constant cross-sectional shape along the YZ plane over the entire X direction, but is not limited thereto. For example, the cross-sectional shape of the punch 62 along the YZ plane may be different at each position in the X direction according to a cross-sectional shape of the workpiece W along the YZ plane or the like (for example, a difference between the partition portion 85 and the hole 72). The same applies to the punch receiving portion 613.

In the embodiments described above, the pressing member 63 in the Y direction functions to press the workpiece W in the Y direction from the positive side in the Y direction (that is, to prevent the workpiece W from moving toward the positive side in the Y direction). Alternatively, in addition to this, another pressing member that presses the workpiece W in the Y direction from the negative side in the Y direction may be provided.

In the embodiments described above, the flow path forming member 70 through which a refrigerant for cooling passes is exemplified, and this disclosure can also be applied to a flow path forming member through which a heat medium for heating an object to be heated passes. That is, the flow path forming member 70 according to the present embodiment can be implemented as a flow path forming member that forms a flow path through which a heat medium passes.

## Claims

1. A flow path forming member (70) that forms a flow path through which a heat medium passes, the flow path forming member comprising:
a first wall surface portion (82) and a second wall surface portion (84); and
a seal portion (78) related to the flow path outside a formation position of the flow path while the first wall surface portion and the second wall surface portion face each other at a distance at the formation position of the flow path, wherein
the seal portion is formed by a mechanical deformation portion (821) of the first wall surface portion and a mechanical deformation portion (841) of the second wall surface portion that are integrated with each other via a joint surface (90).

2. The flow path forming member according to claim 1, wherein
the seal portion continuously extends from one end to the other end of the first wall surface portion and the second wall surface portion.

3. The flow path forming member according to claim 1 or 2, wherein
the joint surface has an S-shape in a cross-sectional view.

4. A manufacturing method for a flow path forming member that forms a flow path through which a heat medium passes, the manufacturing method comprising:
a step of preparing a workpiece (W) having a first wall surface portion and a second wall surface portion facing each other at a distance;
a setting step of setting the workpiece in a die assembly (60); and
a processing step of forming a mechanical deformation portion of the first wall surface portion and a mechanical deformation portion of the second wall surface portion that are integrated with each other via a joint surface by applying a local force to the workpiece outside a formation position of the flow path, the processing step being performed on the workpiece set in the die assembly, wherein
the mechanical deformation portion of the first wall surface portion and the mechanical deformation portion of the second wall surface portion form a seal portion related to the flow path.

5. The manufacturing method according to claim 4, wherein
the processing step includes forming the mechanical deformation portion of the first wall surface portion and the mechanical deformation portion of the second wall surface portion by pushing a material of the workpiece into a groove portion of the die assembly, which continuously extends from one end to the other end of the first wall surface portion and the second wall surface portion.

6. The manufacturing method according to claim 4, wherein
the joint surface has an S-shape in a cross-sectional view.

7. A manufacturing apparatus of a flow path forming member that forms a flow path through which a heat medium passes, the manufacturing apparatus comprising:
a die assembly configured to allow a workpiece having a first wall surface portion and a second wall surface portion facing each other at a distance to be set therein, wherein
the die assembly includes:
a die (61) having a groove portion; and
a punch (62) forming a mechanical deformation portion of the first wall surface portion and a mechanical deformation portion of the second wall surface portion by pushing a material of the workpiece into the groove portion, and
the mechanical deformation portion of the first wall surface portion and the mechanical deformation portion of the second wall surface portion form a seal portion related to the flow path.
